# EUROPÄISCHE PATENTANMELDUNG

(11) **EP 2 730 596 A1**
(43) Veröffentlichungstag der Anmeldung: **14.05.2014**
(21) Anmeldenummer: 12192355.1
(22) Anmeldetag: 13.11.2012
(51) Int. Cl.: C08G 18/40, C08G 18/48, C08G 18/66, C08G 18/72, C08G 18/76, C08G 18/79, A01G 1/00, A01G 31/00, C08G 101/00

(54) **Polyurethanweichschaumstoffe enthaltend Pflanzensamen**

(71) Anmelder: BASF SE, 67056 Ludwigshafen (DE)
(72) Erfinder: Die Erfindernennung liegt noch nicht vor
(74) Vertreter: Schuck, Alexander

(57) **Zusammenfassung**

Die Erfindung betrifft einen Polyurethanweichschaumstoff enthaltend keimfähige und/oder gekeimte Pflanzensamen. Der Polyurethanweichschaumstoff kann ein Verstärkungsgewebe aus Fasern, beispielsweise aus Kunststofffasern oder verrottbaren Naturfasern enthalten. Darüber hinaus kann der Polyurethanweichschaumstoff einen Stoff mit hohem Wasserhaltevermögen, beispielsweise einen Superabsorber auf Polyacrylatbasis, enthalten. Als Pflanzensamen kann der Polyurethanweichschaum Samen von Gräsern, Moosen, Flechten, Farnen, Pilzen, Wasserpflanzen, Blütengewächsen und mehrjährigen holzbildenden Pflanzen enthalten. Hergestellt wird der Polyurethanweichschaum indem man (a) Polyisocyanate mit (b) mindestens einer höhermolekularen Verbindung mit mindestens zwei reaktiven Wasserstoffatomen, (c) gegebenenfalls niedermolekularen Kettenverlängerungsmitteln und/oder Vernetzungsmitteln, (d) Katalysatoren, (e) Treibmitteln, (f) gegebenenfalls sonstigen Zusatzstoffen und (g) Pflanzensamen vermischt und das Gemisch zum Polyurethanweichschaumstoff reagieren lässt. Zur Begrünung von Flächen wird der Polyurethanweichschaumstoff in Form einer Platte oder Bahn auf die Fläche aufgelegt oder fest mit ihr verbunden und bewässert. Dadurch ist eine Begrünung von Fassaden, von Dachflächen, Felsuntergrund, Schallschutzwällen und Wüstenboden möglich. Ein Polyurethanweichschaumstoff enthaltend keimfähige und/oder gekeimte Rasensamen kann als Rollrasen verwendet werden.

## Beschreibung

Die Erfindung betrifft einen Polyurethanweichschaumstoff enthaltend keimfähige und/oder gekeimte Pflanzensamen, ein Verfahren zu seiner Herstellung, dessen Verwendung sowie ein Verfahren zur Begrünung von Flächen unter Verwendung des Polyurethanweichschaumstoffs.

Bei dem Ausbringen von Samen an vertikalen oder auf horizontalen Flächen, die starkem Wind und Trockenheit ausgesetzt sind, können diese nicht direkt an ihrem Ausbringungsort zum Keimen gebracht werden, da sie verwehen würden. Auch wenn die Samen verkapselt oder in einem lockeren Gewebe ausgebracht werden, können sie in vertikaler Position nicht zum Keimen gebracht werden, da keine Möglichkeit zur Wurzelverankerung besteht und darüber hinaus keine kontinuierliche Wasserversorgung gewährleistet ist.

Deshalb werden Begrünungsprojekte an schwierigen Standorten üblicherweise auf speziell vorbereiteten Böden mit vorgezogenen (d.h. schon gekeimten) Pflanzen in geeigneten Substratbehältnissen durchgeführt, wobei diese Substrate, wie z.B. Torf oder Pflanzerde, auch Dünger und wasserspeichernde Materialien enthalten können, um ein gewisses Wasserhaltevermögen zwischen den Bewässerungsphasen zu erreichen.

Aufgabe der Erfindung ist es, neue Lösungen bereitzustellen für
(i) die Begrünung von horizontalen Flächen, die besonderen klimatischen oder mechanischen Beanspruchen ausgesetzt sind, wie Trockenzonen, Wüsten, Starkwindbereichen, steinigen, felsigen Gebieten mit einer geringer oder fehlender Sand- oder Humusschicht, welche eine selbständige Verwurzelung von gekeimten Samen nicht zulassen;
(ii) die Begrünung von vertikalen Flächen, wie Fassaden, Hauswänden, Felshängen, Deichen und Schutzbauten, bei denen ein Bewuchs bisher nur in Pflanzschalen oder in Mauerhöhlungen möglich ist.

Gelöst wird die Aufgabe durch einen Polyurethanweichschaumstoff enthaltend keimfähige und/oder gekeimte Pflanzensamen.

Überraschenderweise wurde gefunden, dass Pflanzensamen, beispielsweise Grassamen, die in einen bei niedriger Temperatur reagierenden, offenzelligen Polyurethanschaum eingeschäumt werden, auch nach der Reaktionsschäumung noch keimfähig sind. Solange die Samen trocken gehalten werden, sind sie lagerfähig, bei einer Lagerung in feuchtem Klima oder bei Wassergabe keimen sie in dem Polyurethanschaum auf, und es bildet sich ein Pflanzenteppich. Wird der Polyurethanschaum in Platten oder Bahnen geschnitten, können diese in horizontaler Richtung als Pflanzteppiche oder zur schnellen Befestigung von Wällen oder Deichen ausgebracht werden. In vertikaler Position angebracht lassen sie sich als Fassadenbegrünung, Temperatur - oder Feuchteregulatoren im Innen- oder Außenbereich nutzen. Bei horizontaler Verlegung können sie als besonders trittfester Rollrasenersatz fungieren. Durch die Einschäumung von Verstärkungsgeweben, beispielsweise aus Polyamidfaser, lässt sich die Trag- und Reißfestigkeit der Schaummatten verbessern, so dass sie in vertikaler Richtung mehrere Meter überbrücken können. Eine Tröpfchenbewässerung ist aufgrund der guten Saugfähigkeit des offenzelligen Polyurethanschaums möglich, Pflanzennährstoffe sowie Dünger können über die Bewässerung oder im Falle einer großflächigen Ausbringung in feuchteren Umgebungen auch schon im Schäumprozess eingebracht werden.

Gelöst wird die Aufgabe weiterhin durch ein Verfahren zur Herstellung von Polyurethanweichschaumstoffen enthaltend keimfähige Pflanzensamen, bei dem man (a) Polyisocyanate mit (b) mindestens einerhöhermolekularen Verbindung mit mindestens zwei reaktiven Wasserstoffatomen, (c) gegebenenfalls niedermolekularen Kettenverlängerungsmitteln und/oder Vernetzungsmitteln, (d) Katalysatoren, (e) Treibmitteln, (f) gegebenenfalls sonstigen Zusatzstoffen und (g) Pflanzensamen vermischt und das Gemisch zum Polyurethanweichschaumstoff reagieren lässt.

Voraussetzung zum Erhalt der Keimbarkeit der Pflanzensamen ist, dass die Reaktionstemperatur des Schaums ausreichend niedrig ist. Die maximale Reaktionstemperatur, bei der die Keimbarkeit des Pflanzensamens noch erhalten bleibt, ist stark von der Samenart abhängig. Im Allgemeinen liegt diese Maximaltemperatur bei 80°C. Die Temperatur im Innern des Schaumes kann einerseits durch die Rezeptur (vorreagiertes Prepolymer, Gehalt an sekundären OH-Gruppen in der Polyolkomponente), die Reaktionsführung (Art des Katalysators und Menge) als auch durch die Dicke des zu produzierenden Schaumblockes bzw. der Schaummatte beeinflusst werden. Da der Schaum im Wesentlichen zur Fixierung der Samenkörner dient, sind sehr gute mechanischen Eigenschaften des Schaums eher weniger wichtig. Wichtiger ist neben einer niedrigen Maximaltemperatur eine gute Durchwurzelbarkeit des Schaums. Bodenstörende Bestandteile, wie Metallkatalysatoren oder pflanzentoxische Bestandteile sowie Herbizide, Fungizide, Bakteriozide und Konservierungsmittel für den Schaum sind zu vermeiden, um das Pflanzenwachstum nicht zu beeinträchtigen. Die Durchwurzelung ist direkt proportional zur Offenzelligkeit des Schaums. Das Wasserhaltevermögen ist durch die Feinzelligkeit, Offenzelligkeit sowie hydrophile Rezepturbestandteile und Additive, wie Zeolithe, Superabsorber oder allgemein wasserquellende Stoffe, beeinflussbar.

Polyurethanweichschaumstoffe im Sinne der Erfindung sind Polyisocyanat-Polyadditionsprodukte, die Schaumstoffe gemäß DIN 7726 darstellen und eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa aufweisen. Vorzugsweise weisen Polyurethanweichschaumstoffe im Sinn der Erfindung eine Offenzelligkeit nach DIN ISO 4590 von vorzugsweise größer als 85 %, besonders bevorzugt von größer als 90 % auf.

Die zur Herstellung der erfindungsgemäßen Polurethanweichschaumstoffe verwendete Polyisocyanatkomponente (a) umfasst alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphthylendiisocyanat (NDI) oder Mischungen daraus.

Bevorzugt werden 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), 2,4- oder 2,6-Toluylendiisocyanat (TDI) oder deren Mischungen, Isophorondüsocyanat (IPDI) oder dessen Oligomere, Hexamethylendiisocyanat (HDI) oder dessen Oligomere oder Mischungen der genannten Isocyanate verwendet. Die bevorzugt verwendeten Isocyanate können auch Uretdion-, Allophanat-, Uretonimin-, Harnstoff-, Biuret-, Isocyanurat- oder Iminooxadiazintriongruppen enthalten. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Das Polyisocyanat (a) wird vorzugsweise in Form von Polyisocyanatprepolymeren eingesetzt. Diese Polyisocyanatprepolymere sind erhältlich, indem vorstehend beschriebene Polyisocyanate (a1), beispielsweise bei Temperaturen von 30 bis 100 °C, bevorzugt bei etwa 80 °C, mit Polyolen (a2), zum Prepolymer umgesetzt werden. Vorzugsweise werden zur Herstellung der erfindungsgemäßen Prepolymere Polyole auf Basis von Polyestern, beispielsweise ausgehend von Adipinsäure, oder Polyether, beispielsweise ausgehend von Ethylenoxid und/oder Propylenoxid, verwendet.

Polyole (a2) sind dem Fachmann bekannt und beispielsweise beschrieben im "Kunststoffhandbuch, 7, Polyurethane", Carl Hanser Verlag, 3. Auflage 1993, Kapitel 3.1. Bevorzugt werden als Polyole (a2) höhermolekulare Verbindungen mit mindestens zwei reaktiven Wasserstoffatomen, wie unter (b) beschrieben, eingesetzt.

Gegebenenfalls können der Umsetzung zum Polyisocyanatprepolymer noch Kettenverlängerungsmittel (a3) zugegeben werden. Als Kettenverlängerungsmittel (a3) für das Prepolymer sind zwei- oder dreiwertige Alkohole, beispielsweise Dipropylenglykol und/oder Tripropylenglykol, oder die Addukte von Alkylenoxiden, bevorzugt Propylenoxid, an Dipropylenglykol und/oder Tripropylenglykol, geeignet.

Als höhermolekulare Verbindung mit mindestens zwei reaktiven Wasserstoffatomen (b) kommen die zur Herstellung von Polyurethan-Weichschaumstoffen üblichen und bekannten Verbindungen zum Einsatz.

Als Verbindung mit mindestens zwei aktiven Wasserstoffatomen (b) kommen bevorzugt Polyesteralkohole und/oder Polyetheralkohole mit einer Funktionalität von 2 bis 8, insbesondere von 2 bis 6, vorzugsweise von 2 bis 4 und einem mittleren Äquivalentmolekulargewicht im Bereich von 400 bis 10000 g/mol, vorzugsweise 1000 bis 4000 g/mol, in Betracht.

Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen oder durch Kondensation von Tetrahydrofuran hergestellt werden. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit. Bevorzugt eingesetzte Amine sind Amine mit bis zu 10 Kohlenstoffatomen, beispielsweise aliphatische Amine wie Ethylendiamin, Diethylentriamin, Propylendiamin, aromatische Amine wie 2,3 Toluylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Weichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Es ist möglich, auch den zur Herstellung des Prepolymeren eingesetzten Polyetheralkohol in der Komponente b) einzusetzen.

Zur Herstellung von Weichschäumen und Integralschäumen werden insbesondere zweifach und/oder dreifach funktionelle Polyetheralkohole eingesetzt.

Bevorzugte Polyetherpolyole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 gegenüber Isocyanatgruppen reaktive Wasserstoffatome gebunden enthält, oder durch kationische Polymerisation mit LewisSäuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid, vorzugsweise Tetrahydrofuran, Ethylenoxid und 1,2-Propylenoxid. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole in der Regel zu über 70 % primäre OH-Endgruppen aufweisen. Im Fall von Polytetrahydrofuran-Polyolen wird beispielsweise Tetrahydrofuran kationisch ringöffnend polymerisiert.

Als Startermolekül kommen Wasser und 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan, vorzugsweise Ethylenglykol, 1,2- und 1,3-Propandiol, Diethylenglykol, Dipropylenglykol, Tripropylenglykol und 1,4-Butandiol in Betracht.

Bevorzugte Polyetherpolyole besitzen im Allgemeinen eine mittlere OH-Funktionalität von 1,5 bis 3, bevorzugt von 1,6 bis 2,9, besonders bevorzugt von 1,7 bis 2,7 und insbesondere von ca. 2, und Molekulargewichte von 1000 bis 12000, vorzugsweise von 1400 bis 8000 g/mol und besonders bevorzugt 1700 bis 6000 g/mol.

Weiter können bevorzugt als Verbindung mit mindestens zwei aktiven Wasserstoffatomen Polyesterpolyole, beispielsweise herstellbar aus organischen Dicarbonsäuren mit 2 bis 12 Kohlenstoffatomen, vorzugsweise aliphatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen, eingesetzt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und die isomeren Naphthalindicarbonsäuren. Vorzugsweise wird Adipinsäure eingesetzt. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden.

Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure und Hydroxybenzoesäuren. Vorzugsweise eingesetzt wird Dipropylenglykol.

Die Hydroxylzahl der Polyesteralkohole liegt vorzugsweise im Bereich zwischen 10 und 400 mg KOH/g.

Polyurethanweichschaumstoffe auf Basis von Polyesteralkoholen zeichnen sich durch eine gute biologische Abbaubarkeit (Verrottbarkeit) aus.

Als Polyole eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Bei einem polymermodifizierten Polyol handelt es sich um ein so genanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-% aufweist.

*Polymerpolyole* sind beispielsweise in EP-A-250 351, DE 111 394, US 3 304 273, US 3 383 351, US 3 523 093, DE 1 152 536 und DE 1 152 537 beschrieben und werden üblicherweise durch radikalische Polymerisation von geeigneten olefinischen Monomeren, beispielsweise (Meth)Acrylaten, (Meth)Acrylsäure und/oder Acrylamid, in einem als Pfropfgrundlage dienenden Polyol, bevorzugt Polyesterol oder Polyetherol, hergestellt. Die Seitenketten entstehen im Allgemeinen durch Übertragung der Radikale von wachsenden Polymerketten auf Polyole.

Ist in der höhermolekularen Verbindung (b) Polymerpolyol enthalten, liegt dies vorzugsweise zusammen mit weiteren Polyolen vor, beispielsweise Polyetherolen, Polyesterolen oder Mischungen aus Polyetherolen und Polyesterolen. Besonders bevorzugt ist der Anteil an Polymerpolyol größer als 5 Gew.-%, bezogen auf das Gesamtgewicht der Komponente (b). Die Polymerpolyole können beispielsweise, bezogen auf das Gesamtgewicht der Komponente (b) in einer Menge von 7 bis 90 Gew.-%, oder von 11 bis 80 Gew.-% enthalten sein. Besonders bevorzugt handelt es sich bei dem Polymerpolyol um Polymerpolyesterol oder Polymerpolyetherol.

Im Allgemeinen werden bei der Herstellung des erfindungsgemäßen PolyurethanWeichschaums die Polyisocyanate (a), die höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, dass das Äquivalenz-Verhältnis von NCO-Gruppen der Polyisocyanate (a) zur Summe der reaktiven Wasserstoffatome der Komponenten (b), und gegebenenfalls (c) und (e) 0,7 bis 1,25:1, vorzugsweise 0,80 bis 1,15:1 beträgt. Ein Verhältnis von 1:1 entspricht dabei einem Isocyanatindex von 100. Der Anteil an Komponente (b) beträgt vorzugsweise zwischen 0,01 und 90, besonders bevorzugt zwischen 0,5 und 50 und insbesondere bevorzugt zwischen 0,7 und 30 Gew.-% bezogen auf das Gesamtgewicht der Komponenten (a) bis (f).

Als Kettenverlängerungsmittel und/oder Vernetzungsmittel (c) werden Substanzen mit einem Molekulargewicht von vorzugsweise kleiner 500 g/mol, besonders bevorzugt von 60 bis 400 g/mol eingesetzt, wobei Kettenverlängerer 2 gegenüber Isocyanaten reaktive Wasserstoffatome und Vernetzungsmittel mindestens 3 gegenüber Isocyanat reaktive Wasserstoffatome aufweisen. Diese können einzeln oder in Form von Mischungen eingesetzt werden. Vorzugsweise werden Diole und/oder Triole mit Molekulargewichten kleiner als 400, besonders bevorzugt von 60 bis 300 und insbesondere von 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, o-, m-, p-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxycyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (d) Monoethylenglycol, 1,4-Butandiol und/oder Glycerin eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) und (c) zum Einsatz.

Als Katalysatoren (d) zur Herstellung der Polyurethanschaumstoffe werden bevorzugt Verbindungen verwendet, welche die Reaktion der Hydroxylgruppen enthaltenden Verbindungen der Komponente (b) und gegebenenfalls (c) mit den Polyisocyanaten (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyldiethanolamin und Dimethylethanolamin. Ebenso kommen in Betracht organische Metallverbindungen, organische Zinnverbindungen, wie Zinn-(11)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinnmaleat und Dioctylzinndiacetat, sowie Bismutcarboxylate, wie Bismut(III)-neodecanoat, Bismut-2-etyhlhexanoat und Bismut-octanoat oder Mischungen davon. Die organischen Metallverbindungen können allein oder in Kombination mit stark basischen Aminen eingesetzt werden. Vorzugsweise wird allerdings auf Metallkatalysatoren bei Anwendungen, die in Kontakt mit Regenwasser und natürlichen Böden stehen verzichtet, und es werden ausschließlich organische oder aminische Katalysatoren verwendet. Handelt es sich bei der Komponente (b) um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente (b), (c) und (d).

Ferner sind bei der Herstellung von Polyurethanschaumstoffen Treibmittel (e) zugegen. Als Treibmittel (e) können chemisch wirkende Treibmittel und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, Fluorkohlenwasserstoffe, wie Solkane^{®} 365 mfc, oder Gase, wie Kohlendioxid. In einer Ausführungsform wird als Treibmittel eine Mischung dieser Treibmittel, enthaltend Wasser, eingesetzt. Wird kein Wasser als Treibmittel eingesetzt, werden vorzugsweise ausschließlich physikalische Treibmittel verwendet.

Der Gehalt an physikalischen Treibmitteln (e) liegt in einer bevorzugten Ausführungsform im Bereich zwischen 1 und 20 Gew.-%, insbesondere 5 und 20 Gew.-%, die Menge an Wasser vorzugsweise im Bereich zwischen 0,5 und 10 Gew.-%, insbesondere 1 und 5 Gew.-%.

Besonders bevorzugt wird Wasser als Treibmittel (e) verwendet.

Als Hilfsmittel und/oder Zusatzstoffe (f) werden beispielsweise oberflächenaktive Substanzen, Schaumstabilisatoren, Zellregler, äußere und innere Trennmittel, Füllstoffe, Pigmente, gegebenenfalls Hydrolyseschutzmittel sowie fungistatisch und bakteristatisch wirkende Substanzen eingesetzt, soweit sie das Pflanzenwachstum nicht beeinträchtigen.

Vorzugsweise werden jedoch keine Hydrolyseschutzmittel, fungistatisch oder bakteristatisch wirkende Substanzen eingesetzt. Dadurch werden z.B. in Kombination mit aliphatischen Polyesterpolyolen auf der Basis von Ethylenglykolen leicht verrottbare Polyurethanweichschaumstoffe erhalten.

Bei der technischen Herstellung von Polyurethan-Schaumstoffen ist es üblich, die Verbindungen mit mindestens zwei aktiven Wasserstoffatomen (b) und ein oder mehrere der Einsatzstoffe (c) bis (f), soweit nicht bereits zur Herstellung von Polyisocyanatprepolymeren verwendet, vor der Umsetzung mit dem Polyisocyanat (a) zu einer so genannten Polyolkomponente zu vereinigen.

Zur Herstellung der erfindungsgemäßen Polyurethane werden die organischen Polyisocyanate mit den Verbindungen mit mindestens zwei aktiven Wasserstoffatomen im Beisein der genannten Treibmittel, Katalysatoren und Hilfs- und/oder Zusatzstoffe (Polyolkomponente) zur Reaktion gebracht.

Im Allgemeinen werden bei der Herstellung der erfindungsgemäßen Polyurethanweichschaumstoffe die Polyisocyanate (a), die höhermolekularen Verbindungen mit mindestens zwei reaktiven Wasserstoffatomen (b), gegebenenfalls die Kettenverlängerungs- und/oder Vernetzungsmittel (c) in solchen Mengen zur Umsetzung gebracht, dass das Äquivalenz-Verhältnis von NCO-Gruppen der Polyisocyanate (a) zur Summe der reaktiven Wasserstoffatome der Komponenten (b), gegebenenfalls (c) und (e) 0,7 bis 1,25:1, vorzugsweise 0,80 bis 1,15:1 beträgt. Ein Verhältnis von 1:1 entspricht dabei einem Isocyanatindex von 100.

Die Herstellung der Polyurethan-Schaumstoffe erfolgt vorzugsweise nach dem one-shot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken oder Schaumbahnen hergestellt werden.

Besonders vorteilhaft ist es, nach dem so genannten Zweikomponentenverfahren zu verfahren, bei dem, wie oben ausgeführt, eine Polyolkomponente hergestellt und mit Polyisocyanat (a) verschäumt wird. Die Komponenten werden im Allgemeinen bei einer Temperatur von 15 bis 80 °C vermischt und in das Formwerkzeug beziehungsweise auf die Bandstraße gebracht. Die Temperatur im Formwerkzeug liegt im Allgemeinen im Bereich zwischen 15 und 80 °C, vorzugsweise zwischen 30 und 60 °C.

In einer bevorzugten Ausführungsform der Erfindung werden die Pflanzensamen (g) bereits beim Vermischen der Komponenten (a) bis (f) in dem reaktionsfähigen Polyurethanschaumgemisch verteilt. Insbesondere werden die Pflanzensamen der Polyolkomponente aus den Einsatzstoffen (b) bis (f) zugegeben.

In einer weiteren Ausführungsform werden sie in das Formwerkzeug eingebracht und mit dem reaktionsfähigen Polyurethanschaumgemisch vermischt. Beispielsweise können sie auf dem Boden des Formwerkzeugs ausgestreut oder auf das in dem Formwerkzeug oder der Bandstraße befindliche reaktionsfähige Gemisch aufgestreut werden.

In einer bevorzugten Ausführungsform enthält der Polyurethanweichschaumstoff ein Verstärkungsgewebe aus Fasern. Durch die Einschäumung von groben Verstärkungsgeweben lässt sich die Trag- und Reißfestigkeit der Schaummatten verbessern. Verstärkungsgewebe können aus Kunststofffasern oder aus Naturfasern bestehen. In einer Ausführungsform enthält der Polyurethanweichschaumstoff ein Verstärkungsgewebe aus Kunststofffasern, beispielsweise aus Polypropylen-, Polyethylen- oder Polyamid-Fasern. In einer weiteren Ausführungsform enthält der Polyurethanweichschaumstoff ein Verstärkungsgewebe aus verrottbaren Naturfasern, beispielsweise Sisal-Fasern, Kokosmatten, Hanf- oder Flachsgeweben.

Die erfindungsgemäßen Polyurethanweichschaumstoffe können als weitere Komponente (h) Stoffe mit hohem Wasserhaltevermögen enthalten. Beispiele sind Superabsorber auf Polyacrylatbasis. Diese können bei der Herstellung der Polyurethanweichschaumstoffe mit den Komponenten (a) bis (g) im Mischkopf vermischt werden oder in Mischung mit den Samen aufgebracht werden.

Die erfindungsgemäßen Polyurethanweichschaumstoffe können als weitere Komponente (i) Nährstoffe enthalten. Beispiele sind Düngemittel auf Basis von Mineraldüngern, Stickstoff- und Phosphorverbindungen sowie Spurenelementen. Diese können in verkapselter Form ebenfalls bei der Herstellung der Polyurethanweichschaumstoffe mit den Komponenten (a) bis (g) vermischt oder vorzugsweise im Gemisch mit den Samen aufgebracht werden.

Die erfindungsgemäßen Polyurethanweichschaumstoffe können außerdem ein Drainagesystem eingeschäumt enthalten, das beispielsweise aus dünnwandigen perforierten Polyethylen- oder Polypropylenschläuchen aufgebaut sein kann und vorzugsweise in Verbindung mit den Verstärkungsmitteln in den Schaum eingebracht wird.

Beispiele für Pflanzensamen sind die Samen von Gräsern, Moosen, Flechten, Farnen, Wasserpflanzen, Blütengewächsen sowie von mehrjährigen holzbildenden Pflanzen, wie Sträuchern, Ranken, Efeu und Weingewächsen. Unter Samen werden auch Sporen verstanden, beispielsweise von Pilzen, Flechten und Moosen.

Gegenstand der Erfindung ist auch ein Verfahren zur Begrünung von Flächen, bei dem ein Polyurethanweichschaumstoff in Form einer Platte oder Bahn auf die Fläche aufgelegt oder fest mit ihr verbunden und bewässert wird. Die Platten oder Bahnen weisen im Allgemeinen eine Dicke von 0,5 bis 10 cm, bevorzugt von 1 bis 5 cm, beispielsweise von 2 bis 3 cm auf. Diese können durch Zerschneiden von Blöcken aus Polyurethanschaum oder durch direkte Herstellung von Bahnen aus Polyurethanschaum auf einer Bandstraße erhalten werden.

Flächen welche nach dem erfindungsgemäßen Verfahren begrünt werden können, sind beispielsweise Fassaden, Dachflächen, Felsuntergrund, Lärmschutzwälle und Wüstenboden.

In einer bevorzugten Ausführungsform wird ein erfindungsgemäßer Polyurethanweichschaumstoff, der keimfähige oder bereits gekeimte Rasensamen enthält, als Rollrasenersatz verwendet.

Auf Flächen, auf denen sich keine Samen halten können und Bodenaufträge schnell verweht werden, z. B. Betondächer, Felsuntergrund und Erosionsflächen, kann mittels einer wenige cm dicken, beispielsweise 2 - 3 cm dicken Samenmatte eine Erstbesiedelung mit Pflanzen erreicht werden, da die Samen vor der Keimung nicht durch Wind oder Regen vor der Keimung fortgetragen werden können. Die Matten werden auf dem Untergrund fixiert, was beispielsweise durch Verkleben oder Verdübelung geschehen kann. Der offenzellige Weichschaum mit seiner schwammartigen Beschaffenheit begünstig weiterhin die Ablagerung von kleinsten Partikeln und Stäuben, wie abgestorbenen Pflanzenteilen, Samen, Sporen, Lehm- und Gesteinsstäuben und fördert somit den Aufbau einer durchwurzelungsfähigen, Nährstoffe enthaltenden Schicht.

Für eine Pionierbepflanzung oder Wüstenbegrünung sollten die Pflanzensamen enthaltenden Weichschaummatten nicht zu schnell verrotten. Bevorzugt sind (hydrolysebeständige) Polyurethanweichschäume auf Basis von Polyetherolen. Vorzugsweise werden diese mit einer Sandschicht abgedeckt, um auf diese Weise dem Wurzelwerk einen gewissen Schutz vor Temperaturschwankungen zu geben. Neben einem Verstärkungsgewebe aus Polyamid-, Polypropylen- oder Sisal-Fasern kann bei der Herstellung des Polyurethanweichschaums ein Drainagesystem mit eingeschäumt werden, das die spätere Wasserversorgung übernimmt. Zum besseren Wasserhaltevermögen können dem Schaum Superabsorber, beispielsweise auf Basis von Polyacrylaten, zugegeben werden. Diese werden bevorzugt in Mischung mit den Samen ausgebracht oder vorher am oder im Verstärkungsnetz fixiert. Die Samenmatten können streifenweise verlegt werden, wobei die Zwischenräume später durch den Pflanzenwuchs oder neu ausgesäte Pflanzen geschlossen werden.

Die Erfindung wird durch die nachstehenden Beispiele näher erläutert.

### Beispiele

### Beispiele 1-4

Die erfindungsgemäßen Materialien wurden im Labor mit einem Standmischer hergestellt. Es wurden Polyurethanweichschaumsystemvarianten mit Rasensamen jeweils in zwei Fertigungsverfahren kombiniert. Eingesetzt wurden handelsüblicher Rasensamen. Die Samen sind nach der Verarbeitung keimfähig und wachsen aus dem Schaum.

### Beispiel 1

### Herstellungsvariante A

Die Rasensamen wurden oben auf dem reagierenden Polyurethanweichschaum verteilt und sanken in diesen teilweise ein. Dazu wurden 54,2 Gewichtsteile der polyetherbasierten A-Komponente für 6 Sekunden mit dem Laborrührer mit 25,8 Teilen der isocyanathaltigen B-Komponente vermischt. Das noch flüssige Reaktionsgemisch wurde in eine temperatur- und haftungsresistente Schale gegossen und glatt verteilt. Auf den aufgestiegenen und noch reagierenden Schaum wurden 20 Gewichtsteile Rasensamen gleichmäßig verteilt. Nach einem Tag wurde der vollständig ausgehärtete Schaum mit den darin und daran haftenden Samen mit Wasser getränkt und in Gewächshausatmosphäre gelagert. Bereits nach 6 Tagen beginnt der Samen zu keimen und es wächst ein dichter Rasen auf dem Schaum. Der bis zu 30 Millimeter dicke Schaum wird von den Rasenwurzeln durchwachsen und ist in der Lage, Feuchtigkeit zu speichern.

### Herstellungsvariante B

Die Rasensamen wurden direkt in den Polyurethanweichschaum eingerührt. Dazu wurden 52,1 Gewichtsteile der polyetherbasierten A-Komponente für 4 Sekunden mit 23 Gewichtsteilen der isocyanathaltigen B-Komponente vorvermischt, dann erfolgte die Zugabe von 24,9 Gewichtsteilen Rasensamen und eine weitere Vermischung für 3 Sekunden. Das noch flüssige Reaktionsgemisch wurde in eine temperatur- und haftungsresistente Schale gegossen und glatt verteilt. Es bildete sich ein von Rasensamen homogen durchsetzter Weichschaum. Nach einem Tag wurde der vollständig ausgehärtete Kombinationsschaum mit Wasser getränkt und in Gewächshausatmosphäre gelagert. Bereits nach 6 Tagen beginnt der Samen zu keimen und es wächst ein dichter Rasen auf dem Schaum. Der bis zu 30 Millimeter dicke Schaum wird von den Rasenwurzeln durchwachsen und ist in der Lage Feuchtigkeit zu speichern.

Die zusätzlichen erfindungsgemäßen Beispiele 2, 3 und 4 wurden auf die gleiche Weise, wie im Beispiel 1 beschrieben, hergestellt. Die genauen Rezepturzusammensetzungen sind in der Tabelle 1 aufgeführt.

| | Beispiel 1 | Beispiel 2 | Beispiel 3 | Beispiel 4 |
|---|---|---|---|---|
| Polyol 1 | 3,11 | 30,94 | 10,65 | 40,85 |
| Polyol 2 | 48,78 | | | |
| Polyol 3 | | | | 10,53 |
| Polyol 4 | | 5,40 | | 4,09 |
| Polyol 5 | | 13,50 | 43,78 | |
| Polyol 6 | | | 0,96 | |
| Treibmittel | 1,72 | 3,24 | 0,68 | 0,70 |
| Stabilisator 1 | | 0,54 | | |
| Stabilisator 2 | 0,26 | 0,11 | 0,34 | |
| Stabilisator 3 | | | | 0,70 |
| Stabilisator 4 | | | 0,17 | |
| Katalysator 1 | 0,31 | 0,22 | | 0,20 |
| Katalysator 2 | 0,05 | | | |
| Katalysator 3 | | | 0,17 | |
| Katalysator 4 | | | | 0,06 |
| Isocyanat 1 | 12,93 | 13,08 | | 11,43 |
| Isocyanat 2 | 8,55 | 8,65 | | 7,54 |
| Isocyanat 3 | 4,28 | 4,33 | 19,13 | 3,89 |
| Isocyanat 4 | | | 1,45 | |
| Additiv | | | 2,67 | |
| Rasensamen | 20 | 20 | 20 | 20 |
| Summe | 100,00 | 100,00 | 100,00 | 100,00 |

### Dabei bedeuten:

- Polyol 1:: Polyethylenglykol mit mittlerem Molekulargewicht (MW) von 3550 g/mol
- Polyol 2:: Polypropylenglykol mit mittlerem Molekulargewicht (MW) von 5390 g/mol
- Polyol 3:: Polypropylenglykol mit mittlerem Molekulargewicht (MW) von 1970 g/mol
- Polyol 4:: Bio-Polyetherpolyol mit mittlerem Molekulargewicht (MW) von 3000 g/mol
- Polyol 5:: Polyesterdiol mit einer mittleren Molmasse von 2000 g/mol
- Polyol 6 :: Monoethylenglykol mit mittlerem Molekulargewicht (MW) von 62 g/mol
- Treibmittel:: Wasser
- Stabilisator 1:: Polyethersiloxan-Copolymer
- Stabilisator 2:: Organomodifizierter Siloxan-Polyether
- Stabilisator 3:: Polysiloxan-Polyether-Copolymer
- Stabilisator 4:: Polymer auf Basis von Carbodiimid und Polyglykolether
- Katalysator 1:: Triethylendiamin gelöst in 67 Gewichtsteilen Dipropylenglykol
- Katalysator 2:: Bis-2-dimethylaminoethylether gelöst in 30 Gewichtsteilen Dipropylenglykol
- Katalysator 3:: N-Methyl-N-(dimethylaminomethyl)-Piperazin
- Katalysator 4:: 3-(Dimethylamino)propylamin
- Isocyanat 1:: Monomeres 2,4- bzw. 4,4-Diphenylmethandiisocyanat mit einer mittleren Molmasse von 250 g/mol und einer Funktionalität von 2
- Isocyanat 2:: Polymeres Methylendiphenylendiisocyanat mit einer mittleren Molmasse von 337g/mol und einer Funktionalität von 2,7
- Isocyanat 3:: Monomeres 4,4-Diphenylmethandiisocyanat mit einer mittleren Molmasse von 250g/mol und einer Funktionalität von 4,4-Diphenylmethandiisocyanat
- Isocyanat 4:: Carbodiimidmodifiziertes Monomeres 4,4-Diphenylmethandiisocyanat mit einem Isocyanatgehalt von 29,5 Gewichtsteilen
- Additiv:: gamma-Butyrolacton mit einer mittleren Molmasse von 86 g/mol
- Rasensamen:: Rasensamen der Firma Kiepenkerl

### Beispiel 5

### Fassadenbegrünung

Aus einem offenzelligen Polyether-Weichschaum werden ca. 2 cm dicke Schaumplatten oder-bahnen hergestellt, die zur Verbesserung ihrer mechanischen Festigkeit ein Stützgerüst aus Polyamidschmelzgewebe enthalten. Das Polyamid-Gewebe wird vor dem eigentlichen Schäumprozess auf den Boden der Schaumform gelegt und während des Schäumens vom reagierenden Polyurethangemisch umflossen, so dass es sich nach der Herstellung des Schaums in der Art eines Skeletts im Weichschaum befindet. Die einzubringenden Samen oder Sporen werden direkt bei Herstellung des Polyurethangemisches in das Rührwerk oder den Mischkopf gegeben. Ist das aufgrund der Größe der Samen nicht möglich, können die Samen alternativ entsprechend zu dem Stützgewebe auf dem Boden der Schaumform verteilt oder aufgestreut werden, so dass auch sie vom Reaktionsgemisch umflossen und von diesem eingeschlossen werden.

Die samenhaltigen Polyurethan-Bahnen werden direkt an der Gebäudefassade angebracht oder an einem Gerüst ca. 1 m vor der Fassade fixiert, um eine Luft- / Schattenschicht zwischen Gebäude und Fassadenverkleidung zu erhalten. Mittels einer Tröpfchenbewässerung an der Oberkante der Fassadenverkleidung, die die Schaumplatten direkt mit Wasser berieselt, wird für eine ausreichende Bewässerung zur Keimung und Versorgung der Pflanzen gesorgt. Alternativ können Trockengewächse, Moose oder Flechten eingesetzt werden, die keine regelmäßige Wasserversorgung benötigen. Wenn die Schaumplatten direkt auf der Gebäudeaußenhaut angebracht werden, ist gegebenenfalls eine Feuchtigkeitssperre in Form einer wasserundurchlässigen Folie erforderlich, die gegebenenfalls gleich bei der Herstellung der Schaumplatten auf die Unterseite derselben aufgebracht werden kann. Die Versorgung mit Pflanzennährstoffen kann bei der Fassadenanwendung vorzugsweise über das Berieselungswasser erfolgen.

### Beispiel 6

### Rollrasenersatz

Aus einem offenzelligen, nicht hydrolysestabilisierten Polyester-Weichschaum werden ca. 1 cm dicke Schaumplatten oder-bahnen hergestellt, die aus einem dickeren Block geschnitten werden. Zur Verbesserung der mechanischen Festigkeit kann der Weichschaum ein verrottbares Sisalgewebe eingeschäumt enthalten. Die einzubringenden Grassamen werden direkt bei Herstellung des Polyurethangemisches in das Rührwerk oder den Mischkopf gegeben und möglichst gleichmäßig verteilt. Die erhaltenen Samenmatten können direkt auf den auszubessernden Rasenboden gelegt und gegebenenfalls mit einer dünnen Erdschicht bedeckt und gewässert werden. In einer anderen Verwendungsform werden sie so weit vorgekeimt, dass sich ein ca. 5 cm langer Rasen auf ihnen gebildet hat und die Schaummatte bereits von Gras durchwurzelt ist. Die Matten werden dann in der Art von Rollrasen ausgebracht, wobei zur Transporterleichterung ein Stützgewebe von Vorteil sein kann.

## Patentansprüche

1. Polyurethanweichschaumstoff enthaltend keimfähige und/oder gekeimte Pflanzensamen.

2. Polyurethanweichschaumstoff nach Anspruch 1, **dadurch gekennzeichnet, dass** er ein Verstärkungsgewebe aus Fasern enthält.

3. Polyurethanweichschaumstoff nach Anspruch 2, **dadurch gekennzeichnet, dass** er ein Verstärkungsgewebe aus Kunststofffasern enthält.

4. Polyurethanweichschaumstoff nach Anspruch 2, **dadurch gekennzeichnet, dass** er ein Verstärkungsgewebe aus verrottbaren Naturfasern enthält.

5. Polyurethanweichschaumstoff nach einem der Ansprüche 1 bis 4, **dadurch gekennzeichnet, dass** er einen Stoff mit hohem Wasserhaltevermögen enthält.

6. Polyurethanweichschaumstoff nach Anspruch 5, **dadurch gekennzeichnet, dass** der Stoff mit hohem Wasserhaltevermögen ein Superabsorber auf Polyacrylatbasis ist.

7. Polyurethanweichschaumstoff nach einem der Ansprüche 1 bis 6, **dadurch gekennzeichnet, dass** die Pflanzensamen ausgewählt sind aus der Gruppe bestehend aus Samen von Gräsern, Moosen, Flechten, Farnen, Pilzen, Wasserpflanzen, Blütengewächsen und mehrjährigen holzbildenden Pflanzen.

8. Polyurethanweichschaumstoff nach einem der Ansprüche 1 bis 7 in Form von Platten oder Bahnen mit einer Dicke im Bereich von 0,5 bis 10 cm.

9. Polyurethanweichschaum nach einem der Ansprüche 1 bis 8, **dadurch gekennzeichnet, dass** er ein Drainagesystem enthält.

10. Verfahren zur Herstellung von Polyurethanweichschaumstoffen enthaltend keimfähige Pflanzensamen, bei dem man (a) Polyisocyanate mit (b) mindestens einer höhermolekularen Verbindung mit mindestens zwei reaktiven Wasserstoffatomen, (c) gegebenenfalls niedermolekularen Kettenverlängerungsmitteln und/oder Vernetzungsmitteln, (d) Katalysatoren, (e) Treibmitteln, (f) gegebenenfalls sonstigen Zusatzstoffen und (g) Pflanzensamen vermischt und das Gemisch zum Polyurethanweichschaumstoff reagieren lässt.

11. Verfahren nach Anspruch 10, **dadurch gekennzeichnet, dass** ein Verstärkungsgewebe aus Fasern in den Polyurethanweichschaumstoff eingeschäumt wird.

12. Verfahren nach Anspruch 10 oder 11, **dadurch gekennzeichnet, dass** die Pflanzensamen (g) mit den Komponenten (a) bis (e) und gegebenenfalls (f) vermischt und das erhaltene Gemisch in eine Schaumform oder auf ein Bandsystem gegeben und zum Polyurethanweichschaumstoff ausgehärtet wird.

13. Verfahren nach Anspruch 12, **dadurch gekennzeichnet, dass** ein Verstärkungsgewebe aus Fasern in die Schaumform eingebracht wird.

14. Verfahren nach einem der Ansprüche 7 bis 13, **dadurch gekennzeichnet, dass** mit den Komponenten (a) bis (e), gegebenenfalls (f) und den Pflanzensamen (g) als weitere Komponente (h) ein Stoff mit hohem Wasserhaltevermögen vermischt wird.

15. Verfahren nach einem der Ansprüche 10 bis 14, **dadurch gekennzeichnet, dass** die Reaktionstemperatur maximal 80 °C beträgt.

16. Verfahren zur Begrünung von Flächen, **dadurch gekennzeichnet, dass** ein Polyurethanweichschaumstoff nach einem der Ansprüche 1 bis 8 in Form einer Platte oder Bahn auf die Fläche aufgelegt oder fest mit ihr verbunden und bewässert wird.

17. Verfahren nach Anspruch 16 zur Begrünung von Fassaden, von Dachflächen, Felsuntergrund, Schallschutzwällen und Wüstenboden.

18. Verwendung eines Polyurethanweichschaumstoffs enthaltend keimfähige und/oder gekeimte Rasensamen als Rollrasen.
